# EUROPÄISCHE PATENTSCHRIFT

(11) **EP 3 811 512 B1**
(45) Veröffentlichungstag und Bekanntmachung des Hinweises auf die Patenterteilung: **02.12.2026**
(21) Anmeldenummer: 19733430.3
(22) Anmeldetag: 17.06.2019
(51) Int. Cl.: H02P 29/50, H02P 21/00, H02P 21/22, H02P 25/22, H02P 9/00, H02K 7/18

(54) **STEUERN EINES GENERATORS EINER WINDENERGIEANLAGE ZUR DÄMPFUNG VON BETRIEBSSCHWINGUNGEN**
CONTROLLING A WIND TURBINE GENERATOR TO DAMPEN OPERATIONAL VIBRATIONS
COMMANDE D'UN GÉNÉRATEUR D'UNE ÉOLIENNE POUR L'AMORTISSEMENT DES VIBRATIONS DE FONCTIONNEMENT

(30) Priorität: 22.06.2018 DE 102018115114
(43) Veröffentlichungstag der Anmeldung: 28.04.2021
(73) Patentinhaber: Wobben Properties GmbH, 26607 Aurich (DE)
(72) Erfinder: GERTJEGERDES, Stefan, 26603 Aurich (DE); CASSOLI, Jair, 26603 Aurich (DE)
(74) Vertreter: Eisenführ Speiser
(86) Internationale Anmeldenummer: PCT/EP2019/065902
(87) Internationale Veröffentlichungsnummer: WO 2019/243265

(56) Entgegenhaltungen:
- EP-A1- 2 485 388
- EP-A1- 2 670 027
- DE-A1- 102014 204 802
- DE-A1- 102015 205 348
- US-A1- 2011 018 281
- US-A1- 2011 298 405

## Beschreibung

Die vorliegende Erfindung betrifft ein Verfahren zum Steuern eines Generators einer Windenergieanlage sowie eine Steuereinheit einer Windenergieanlage. Ferner betrifft die vorliegende Erfindung eine Windenergieanlage, die eine solche Steuereinheit aufweist und/oder ein solches Verfahren ausführt.

Windenergieanlagen weisen üblicherweise einen Generator auf, der einen Stator und einen Rotor umfasst, wobei der Stator eine Drehachse aufweist, um die der Rotor gelagert ist. Zwischen dem Stator und dem Rotor befindet sich zudem ein Luftspalt.

Während des Betriebes einer solchen Windenergieanlage kann es dazu kommen, dass der Generator Betriebsschwingungen aufweist, die eine erhöhte Schallemission zur Folge haben.

Der Grund hierfür können bspw. Nut- oder Polrastmomente sein.

Üblicherweise wird solchen Rastmomenten durch geometrische Änderung im Generatordesign entgegengewirkt, bspw. durch die sogenannte Schrägung bzw. Nutschrägung.

Nachteilig bei einer solchen Vorgehensweise ist, dass sich der gewünschte Effekt zumeist nur in einigen Arbeitspunkten der Windenergieanlage einstellt.

Die Patentanmeldung EP 2 485 388 A1 offenbart eine Steuerung des Betriebs eines elektrischen Generators für eine Windkraftanlage, wobei ein Stator-Ansteuersignal auf der Grundlage eines Steuersignals modifiziert wird, das für ein harmonisches Betriebsverhalten des Generators repräsentativ ist, wobei das Betriebsverhalten durch elektrische und/oder mechanische Schwingungen gegeben ist, deren Frequenzkomponenten von einer Grundfrequenz abweichen.

Das Deutsche Patent- und Markenamt hat in der Prioritätsanmeldung zur vorliegenden Anmeldung weiterhin folgenden Stand der Technik recherchiert: EP 2 670 027 A1,

DE 10 2015 205 348 A1, US 2011 / 0 018 281 A1, US 2011 / 0 298 405 A1 und DE 10 2014 204 802 A1.

Aufgabe der vorliegenden Erfindung ist es daher, eines der obengenannten Probleme zu adressieren. Insbesondere soll eine Möglichkeit geschaffen werden, Schallemissionen bei Generatoren von Windenergieanlagen zu reduzieren. Alternativ soll eine Alternative zu bisher Bekanntem bereitgestellt werden.

Erfindungsgemäß wird somit ein Verfahren zum Steuern eines mit einem Stator eines Generators einer Windenergieanlage elektrisch verbundenen, aktiven Gleichrichters mittels einer feldorientierten Regelung vorgeschlagen, wobei der Generator einen Stator mit einer Drehachse aufweist, um die der Rotor gelagert ist. Der Generator ist dabei bevorzugt als Innenläufer ausgeführt.

Es wird somit insbesondere vorgeschlagen, die Schallemissionen eines Generators einer Windenergieanlage mittels eines aktiven Gleichrichters zu reduzieren, der eine feldorientierte Regelung aufweist.

Hierzu wird für die Steuerung des aktiven Gleichrichters eine feldorientierte Regelung eingesetzt. Diese erlaubt es, die Statorströme in rotorfesten d- und q-Koordinaten vorzugeben. Die d- und q-Koordinaten selbst können dabei bspw. mittels einer d/q-Transformation bereitgestellt werden.

Es wird somit insbesondere vorgeschlagen, die Statorströme I_{d} und I_{q} weitgehend als Gleichgrößen vorzugeben.

Zudem wird eine mechanische Position des Rotors in Bezug auf den Stator bestimmt.

Dies kann bspw. mittels einer Lageerfassung erfolgen, die dazu eingerichtet ist, eine mechanische Lage des Rotors zu ermitteln und diese als elektrische Größe in Form eines elektrischen Winkels auszugeben.

In Abhängigkeit dieser mechanischen Position des Rotors wird nun ein Wechselanteil für die d-Koordinate bestimmt. Der Wechselanteil selbst ist dabei eine alternierende Größe, also bspw. eine Sinusfunktion.

Anschließend wird der bestimmte Wechselanteil der d-Koordinate auf den vorgegebenen Gleichanteil der d-Koordinate so aufaddiert, dass eine veränderte d-Koordinate erzeugt wird, die einen Gleichanteil und einen Wechselanteil aufweist. Dies kann bspw. über eine Additionsstelle in einer entsprechenden Steuerung erfolgen.

Im Anschluss daran wird der aktive Gleichrichter wenigstens in Abhängigkeit der veränderten bzw. modulierten d-Koordinate gesteuert.

Die d-Koordinate ist also dazu vorgesehen, die magnetische Erregung des Generators einzustellen, insbesondere so einzustellen, dass die Schallemission des Generators reduziert wird.

Besonders vorteilhaft hierbei ist, dass das erfindungsgemäße Verfahren dynamisch veränderbar ist und somit gezielt auf die verschiedenen Arbeitspunkte einer Windenergie-anlage im laufenden Betrieb eingegangen werden kann. Dies ist bspw. mittels einer einfachen Nutschrägung nicht möglich, da die Schrägung ab Werk vorbestimmt und im laufenden Betrieb nicht mehr veränderbar ist.

Erfindungsgemäß erfolgt das Bestimmen des Wechselanteils für die d-Koordinate zusätzlich in Abhängigkeit einer Arbeitskennlinie des Generators, wobei bevorzugt aus der Arbeitskennlinie eine Amplitude und ein Offset für den Wechselanteil ermittelt wer-den.

Es wird somit insbesondere vorgeschlagen, die d-Koordinate in Abhängigkeit des Arbeitspunktes der Windenergieanlage einzustellen, bspw. in Abhängigkeit hinterlegter Arbeits- oder Leistungskennlinien. Dies erfolgt insbesondere so, dass mittels der magnetischen Erregung die Schallemissionen des Generators reduziert werden.

Vorzugsweise umfasst das Verfahren ferner die Schritte: Ermitteln eines elektrischen Winkels in Abhängigkeit der mechanischen Position des Rotors und der Polpaarzahl des Generators, wobei das Steuern des aktiven Gleichrichters zusätzlich in Abhängigkeit des elektrischen Winkels erfolgt.

Es wird somit insbesondere vorgeschlagen, dass der aktive Gleichrichter sowohl in Abhängigkeit der Lage des Rotors als auch in Abhängigkeit der Polpaarzahl des Generators gesteuert wird, insbesondere um die Schallemissionen des Generators zu reduzieren.

Vorzugsweise wird vorgeschlagen, dass der Generator, insbesondere der Stator, ein erstes und ein zweites, insbesondere um 30° zu dem ersten versetzten, 3-phasiges Wicklungssystem umfasst und dass das erste, 3-phasige Wicklungssystem in Abhängigkeit eines ersten elektrischen Winkels gesteuert wird, und das zweite, 3-phasige Wicklungs-system in Abhängigkeit eines zweiten elektrischen Winkels gesteuert wird, wobei der zweite elektrische Winkel von dem ersten elektrischen Winkel verschieden ist, insbesondere 30° zu dem ersten elektrischen Winkel phasenverschoben ist.

Es wird somit ferner vorgeschlagen, den Generator mit zwei 3-phasigen Statorsystemen auszuführen, um die Schallemissionen des Generators noch weiter zu reduzieren. Hierzu wird insbesondere vorgeschlagen, die beiden elektrischen Statoren um 30° in der Phase versetzt anzuordnen.

Vorzugsweise erfolgt das Aufaddieren mittels n-ten harmonischen elektrischen Schwingung, um eine m-te harmonische mechanische Schwingung des Generators zu minimieren, bevorzugt mit n = m / 2 und m = 12.

In einer besonders bevorzugten Ausführungsform werden also die auftretenden Betriebs-schwingungen mit der zwölffachen elektrischen Frequenz dadurch minimiert, dass mit der sechsten Harmonischen moduliert bzw. addiert wird.

Der Kern der Idee dabei ist, die Teilströme Iq1 und Iq2 nicht identisch mit der Frequenz der zwölften Harmonischen zu verändern bzw. modulieren, sondern die Teilströme der beiden Teilsysteme, also der beiden Statoren, mit der Frequenz der sechsten Harmonischen zu verändern bzw. modulieren.

Vorzugsweise umfasst das Verfahren ferner die Schritte: Phasenverschieben eines Wechselanteils der q-Koordinate um einen vorbestimmten Phasenwinkel, wobei der Phasenwinkel bevorzugt 180° beträgt und/oder Phasenverschieben des elektrischen Winkels um einen vorbestimmten Phasenwinkel, wobei der Phasenwinkel bevorzugt 30° beträgt.

Vorzugsweise erfolgt das Steuern des aktiven Gleichrichters mittels abc-Koordinaten, die aus der veränderten d-Koordinate und bevorzugt der q-Koordinate rücktransformiert werden, umfassend wenigstens eine a-Koordinate, die zu einer Entstehung zusätzlicher rotierender Drehfelder führt, insbesondere in radialer Rich-tung im Luftspalt des Generators, bevorzugt mit der 5. und/oder 7. Harmonischen der elektrischen Frequenz.

Es wird somit besonders bevorzugt vorgeschlagen, die Ströme zweier Teilsysteme mit der Frequenz der 6.ten Harmonischen zu verändern bzw. modulieren. Der Generator ist also bevorzugt wie vorstehend oder nachstehend beschrieben mit zwei elektrischen Statoren versehen.

Die Amplitude der Modulation von beiden Teilsystemen ist dabei bevorzugt identisch.

Das Resultat ist die Entstehung zusätzlicher rotierenden Drehfelder in Radialrichtung im Luftspalt des Generators mit der elektrischen Frequenz der 5.ten und 7.ten Harmonischen.

Dies zeigt letztendlich auf die 12.ten Harmonische der vorhandenen magnetischen Radialkräfte Auswirkung.

Vorzugsweise umfasst der aktive Gleichrichter ein erstes 3-phasiges Modul und ein zweites 3-phasiges Modul, wobei das erste 3-phasige Modul einem ersten elektrischen Stator zugeordnet ist und das zweite 3-phasige Modul einem zweiten elektrischen Stator zugeordnet ist.

In einer bevorzugten Ausführungsform werden somit mehrere 3-phasige Gleichrichter verwendet. Vorteilhaft hierbei ist die Verwendung zweier gleichartiger Module, wodurch anlagenübergreifend der aktive Gleichrichter günstiger ausfällt.

Alternativ wird vorgeschlagen, für die beiden Statoren einen 6-phasigen Gleichrichter zu verwenden. Vorteilhaft hierbei die ist die einfachere Steuerbarkeit gegenüber zwei 3-phasigen Modulen.

Erfindungsgemäß wird ferner eine Steuereinheit einer Windenergieanlage vorgeschlagen, wobei die Windenergieanlage wenigstens einen Generator aufweist, der einen Stator mit einer Drehachse umfasst, um die ein bzw. der Rotor gelagert ist, wobei der Stator elektrisch mit einem aktiven Gleichrichter verbunden ist, welcher über eine Ansteuereinheit ansteuerbar ist.

Die Steuereinheit umfasst dabei wenigstens ein Lagemodul zum Bestimmen einer mechanischen Position des Rotors in Bezug auf den Stator und ist dazu eingerichtet, ein elektrisches Lagesignal auszugeben, welches aus der mechanischen Position des Rotors bestimmt wurde. Hierfür umfasst das Lagemodul bspw. einen optischen Sensor, der dazu eingerichtet ist, eine Drehposition des Rotors zu erfassen, und eine Recheneinheit, die dazu einrichtet ist, aus der erfassten Drehposition einen elektrischen Winkel zu bestimmen.

Zudem umfasst die Steuereinheit auch ein Transformationsmodul zum Vorgeben von Gleichanteilen rotorfester d- und q-Koordinaten für wenigstens einen 3-phasigen Statorstrom. Das Transformationsmodul ist dabei bevorzugt wenigstens dazu eingerichtet, eine d/q-Transformation durchzuführen und die aus der Transformation bestimmten d- und q-Koordinaten als Gleichanteile bereitzustellen, bspw. als Id und Iq.

Ferner umfasst die Steuereinheit auch ein Dämpfungsmodul zum Aufaddieren wenigstens eines Wechselanteils auf eine d-Koordinate.

Das Dämpfungsmodul ist somit wenigstens dazu eingerichtet, einen Wechselanteil in Abhängigkeit eines elektrischen Lagesignals zu bestimmen, bevorzugt in Abhängigkeit eines elektrischen Winkels zu bestimmen, der Aufschluss über die mechanische Lage des Rotors in Bezug auf den Stator gibt.

Darüber hinaus ist das Dämpfungsmodul so mit dem Transformationsmodul verschaltet, dass eine veränderte d-Koordinate erzeugt werden kann, die einen Gleichanteil und einen Wechselanteil aufweist, insbesondere um die so veränderte d-Koordinate einer Ansteuereinheit des aktiven Gleichrichters bereitzustellen.

Es wird somit insbesondere vorgeschlagen, der Ansteuereinheit des aktiven Gleichrichters eine veränderte d-Koordinate vorzugeben, die sowohl einen Gleichanteil als auch einen Wechselanteil umfasst, wobei der Wechselanteil dazu vorgesehen ist, die Schallemissionen des Generators zu reduzieren.

Um den aktiven Gleichrichter in Abhängigkeit dieser veränderte d-Koordinate steuern, ist die Ansteuereinheit wenigstens dazu eingerichtet, die veränderte d-Koordinate in eine 3-phasige Koordinate zurück zu transformieren, insbesondere so, dass jede der drei Phasen separat angesteuert wird.

Erfindungsgemäß weist das Dämpfungsmodul hierfür eine Multiplikation auf, die auf das elektrische Lagesignal wirkt, um insbesondere ein verändertes elektrisches Lagesignal bereitzustellen.

Es wird somit auch vorgeschlagen, den elektrischen Winkel der Lageerfassung mit einem Vielfachen zu multiplizieren, um entsprechende Generatoreigenschaften und/oder die zu reduzierenden Schwingung entsprechend zu adressieren. In einer bevorzugten Ausführungsform beträgt das Vielfache sechs.

Erfindungsgemäß weist das Dämpfungsmodul einen Offset auf, der in Abhängigkeit einer Arbeitskennlinie der Windenergieanlage mittels einer Addition auf das elektrische Lagesignal wirkt, insbesondere auf das veränderte elektrische Lagesignal, um ein versetztes elektrisches Lagesignal bereitzustellen.

Vorzugsweise umfasst das Dämpfungsmodul eine trigonometrische Funktion, die ein im Wesentlichen sinusförmiges Signal in Abhängigkeit des elektrischen Lagesignals ausgibt, insbesondere in Abhängigkeit des versetzten elektrischen Lagesignals, um ein wechselndes elektrisches Lagesignal bereitzustellen.

Vorzugsweise weist das Dämpfungsmodul eine Amplitudenmodifikation auf, die in Abhängigkeit einer Arbeitskennlinie der Windenergieanlage auf das elektrische Lagesignal wirkt, insbesondere auf das wechselnde elektrische Lagesignal, um den Wechselanteil bereitzustellen.

Vorzugsweise umfasst die Steuereinheit ferner einen Phasenverschieber, der dazu eingerichtet ist, das elektrische Lagesignal um einen vorbestimmten Betrag, insbesondere um 30°, in der Phase zu verschieben und an der Ansteuereinheit bereitzustellen.

Vorzugsweise umfasst die Steuereinheit ferner ein Phasenverschiebungsmodul, welches dazu eingerichtet ist, die veränderte bzw. modulierte d- und/oder q-Koordinate um einen vorbestimmten Betrag, insbesondere um 180°, in der Phase zu verschieben, und/oder mit einem vorbestimmten Betrag, insbesondere -1, zu multiplizieren, insbesondere um eine erste veränderte bzw. modulierte d- und/oder q-Koordinate für einen ersten 3-phasigen Statorstrom eines ersten, 3-phasigen Wicklungssystems des Stators der Windenergieanlage und eine zweite veränderte bzw. modulierte d- und/oder q-Koordinate für einen zweiten 3-phasigen Statorstrom eines zweiten, 3-phasigen Wicklungssystems des Stators der Windenergieanlage bereitzustellen, wobei das erste Wicklungssystem und das zweite Wicklungssystem bevorzugt um 30° phasenverschoben sind.

Es wird somit insbesondere vorgeschlagen, dass der Generator zwei elektrische Statoren aufweist, die zueinander um 30° versetzt sind. Hierdurch kann bspw. die Schallemission abermals reduziert werden. Zudem vereinfacht dies ebenfalls die Ansteuerung des aktiven Gleichrichters, da dieser einen 6-phasigen bzw. einen zweimal 3-phasigen Eingang aufweist.

Erfindungsgemäß wird ferner eine Windenergieanlage vorgeschlagen, umfassend eine Steuereinheit, die dazu eingerichtet ist, ein vorstehend oder nachstehend beschriebenes Verfahren auszuführen, oder alternativ eine vorstehend oder nachstehend beschriebene Steuereinheit.

In einer besonders bevorzugten Ausführungsform umfasst diese Windenergieanlage einen Generator, der einen Stator mit einer Drehachse umfasst, um die ein bzw. der Rotor gelagert ist, wobei der Stator elektrisch mit einem aktiven Gleichrichter verbunden ist, welcher über eine Ansteuereinheit ansteuerbar ist, sowie die Ansteuereinheit für den aktiven Gleichrichter.

Der Generator der Windenergieanlage ist dabei bevorzugt als Innenläufer ausgeführt.

Der Generator, insbesondere der Stator, umfasst ferner zwei um 30° phasenverschobene Wicklungssysteme, die jeweils mit einem 3-phasigen Modul des aktiven Gleichrichters verbunden sind.

Zudem ist die Ansteuereinheit dazu eingerichtet, eine erste Rücktransformation einer ersten modulierten q-Koordinate und einer d-Koordinate und eines ersten elektrischen Lagesignals für das erste 3-phasige Modul des aktiven Gleichrichters und eine zweite Rücktransformation einer zweiten modulierten q-Koordinate und der d-Koordinate und eines zweiten elektrischen Lagesignals für das zweite 3-phasige Modul des aktiven Gleichrichters auszuführen.

Die zweite modulierte q-Koordinate ist dabei gegenüber der ersten modulieren q-Koordinate um 180° phasenverschoben und das zweite elektrische Lagesignal ist gegenüber dem ersten elektrischen Lagesignal um 30° phasenverschoben.

Es wird somit insbesondere ein 6-phasiger Generator mit zwei um 30° versetzten Drehstromsystemen vorgeschlagen, wobei für jedes System einzelne d/q-Transformationen implementiert sind.

Zur Steuerung werden die Größen I_{d1} und I_{q1} für das erste System sowie I_{d2} und I_{q2} für das zweite, um 30° verschobene System verwendet.

Es wird also vorgeschlagen, die drehmomentbildenden Komponenten der Ströme I_{q1} und I_{q2} zu modulieren, und zwar insbesondere so, dass damit die auftretenden Betriebsschwingungen minimiert werden, insbesondere die mit einer Frequenz des 12-fachen der elektrischen Frequenz.

Hierzu wird insbesondere vorgeschlagen, dass die Ströme I_{q1} und I_{q2} nicht identisch mit der Frequenz der 12ten Harmonischen moduliert werden, sondern die Ströme der beiden Teilsysteme mit der Frequenz der 6ten Harmonischen moduliert werden.

Hierzu wird ebenfalls eine Phasenverschiebung in der Modulation vorgeschlagen, die bevorzugt 180° beträgt.

Die erfindungsgemäße Lehre führt insbesondere zu einer Verstetigung des Drehmomentes in einem weiten Arbeitsbereich der Windenergieanlage und zu einer Minimierung des Nutrastmomentes.

Erfindungsgemäß wird ferner eine Windenergieanlage vorgeschlagen, umfassend eine Steuereinheit, die dazu eingerichtet ist, ein vorstehend oder nachstehend beschriebenes Verfahren auszuführen, oder alternativ eine vorstehend oder nachstehend beschriebene Steuereinheit.

In einer besonders bevorzugten Ausführungsform umfasst diese Windenergieanlage einen Generator, der einen Stator mit einer Drehachse umfasst, um die ein bzw. der Rotor gelagert ist, wobei der Stator elektrisch mit einem aktiven Gleichrichter verbunden ist, welcher über eine Ansteuereinheit ansteuerbar ist, sowie die Ansteuereinheit für den aktiven Gleichrichter.

Der Generator der Windenergieanlage ist dabei bevorzugt als Innenläufer ausgeführt.

Der Generator, insbesondere der Stator, umfasst ferner zwei um 30° phasenverschobene Wicklungssysteme, die jeweils mit einem 3-phasigen Modul des aktiven Gleichrichters verbunden sind.

Zudem ist die Ansteuereinheit dazu eingerichtet, eine erste Rücktransformation einer ersten veränderte bzw. modulierten d-Koordinate und einer q-Koordinate und eines ersten elektrischen Lagesignals für das erste 3-phasige Modul des aktiven Gleichrichters und eine zweite Rücktransformation einer zweiten veränderten d-Koordinate und der q-Koordinate und eines zweiten elektrischen Lagesignals für das zweite 3-phasige Modul des aktiven Gleichrichters auszuführen.

Die zweite veränderte d-Koordinate ist dabei gegenüber der ersten veränderten bzw. modulieren d-Koordinate um 180° phasenverschoben und das zweite elektrische Lagesignal ist gegenüber dem ersten elektrischen Lagesignal um 30° phasenverschoben.

Es wird somit insbesondere ein 6-phasiger Generator mit zwei um 30° versetzten Drehstromsystemen vorgeschlagen, wobei für jedes System einzelne d/q-Transformationen implementiert sind.

Zur Steuerung werden die Größen Id1 und Iq1 für das erste System sowie Id2 und Iq2 für das zweite, um 30° verschobene System verwendet.

Es wird also vorgeschlagen, die, die magnetische Erregung beeinflussenden Ströme Id1 und Id2 zu verändern bzw. zu modulieren, und zwar insbesondere so, dass damit die auftretenden Betriebs-schwingungen minimiert werden, insbesondere die mit einer Frequenz des 12-fachen der elektrischen Frequenz.

Hierzu wird insbesondere vorgeschlagen, dass die Ströme Id1 und Id2 nicht identisch mit der Frequenz der 12ten Harmonischen verändert bzw. moduliert werden, sondern die Ströme der beiden Teilsysteme mit der Frequenz der 6ten Harmonischen verändert bzw. moduliert werden.

Hierzu wird ebenfalls eine Phasenverschiebung in der Modulation vorgeschlagen, die bevorzugt 180° beträgt.

Die erfindungsgemäße Lehre führt insbesondere zu einer Verringerung der Schallemissionen des Generators einer Windenergieanlage.

Die vorliegende Erfindung wird nun nachfolgend exemplarisch anhand von Ausführungsbeispielen unter Bezugnahme auf die begleitenden Figuren näher erläutert.
- Fig. 1: zeigt eine schematische Ansicht einer erfindungsgemäßen Windenergieanlage gemäß einer Ausführungsform.
- Fig. 2: zeigt einen schematischen Ablauf eines erfindungsgemäßen Verfahrens gemäß einer Ausführungsform.
- Fig. 3: zeigt einen schematischen Aufbau einer alternativen Steuereinheit einer Windenergieanlage außerhalb der Erfindung.

- Fig. 4: zeigt einen schematischen Ablauf eines weiteren erfindungsgemäßen Verfahrens gemäß einer Ausführungsform.
- Fig. 5: zeigt einen schematischen Aufbau einer weiteren erfindungsgemäßen Steuereinheit einer Windenergieanlage gemäß einer Ausführungsform
- Fig. 6: zeigt einen schematischen Aufbau einer alternativen Steuereinheit einer Windenergieanlage außerhalb der Erfindung.
- Fig. 7: zeigt einen schematischen Aufbau einer weiteren, alternativen erfindungsgemäßen Steuereinheit einer Windenergieanlage gemäß einer Ausführungsform.

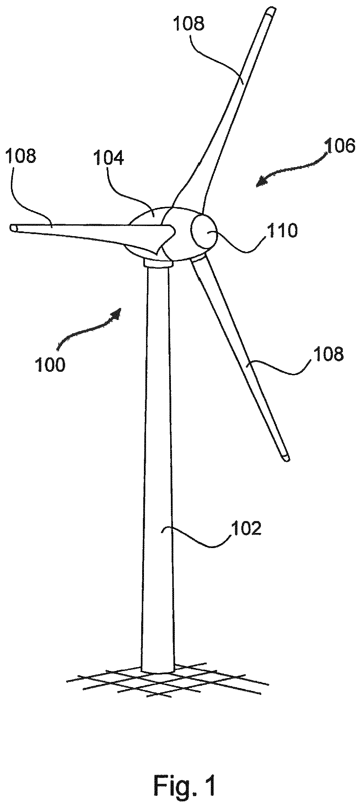

Fig. 1 zeigt eine schematische Ansicht einer Windenergieanlage 100.

Die Windenergieanlage 100 weist hierzu einen Turm 102 und eine Gondel 104 auf. An der Gondel 104 ist ein aerodynamischer Rotor 106 mit drei Rotorblättern 108 und einem Spinner 110 angeordnet. Der Rotor 106 wird im Betrieb durch den Wind in eine Drehbewegung versetzt und treibt dadurch einen Generator in der Gondel 104 an.

Zum Betreiben der Windenergieanlage ist ferner eine vorstehend oder nachstehend beschriebene Steuereinheit sowie vorstehend oder nachstehend beschriebene Ansteuereinheit vorgesehen.

Der Generator umfasst zudem einen Stator mit einer Drehachse und einen Rotor, der diese Drehachse umläuft, vorzugsweise als Innenläufer, wobei der Stator elektrisch mit einem aktiven Gleichrichter verbunden ist, welcher über eine Ansteuereinheit ansteuerbar ist.

Der Stator weist dabei zwei, um 30° phasenverschobene, elektrische Wicklungssysteme auf, die jeweils mit einem 3-phasigen Modul des aktiven Gleichrichters verbunden sind. Der Generator ist somit 6-phasig ausgeführt.

Ferner ist die Ansteuereinheit dazu eingerichtet, eine erste Rücktransformation einer ersten modulierten q-Koordinate und einer d-Koordinate und eines ersten elektrischen Lagesignals für das erste 3-phasige Modul des aktiven Gleichrichters und eine zweite Rücktransformation einer zweiten modulierten q-Koordinate und der d-Koordinate und eines zweiten elektrischen Lagesignals für das zweite 3-phasige Modul des aktiven Gleichrichters auszuführen, wobei die zweite modulierte q-Koordinate gegenüber der ersten modulierten q-Koordinate um 180° phasenverschoben ist, und das zweite elektrische Lagesignal gegenüber dem ersten elektrischen Lagesignal um 30° phasenverschoben ist.

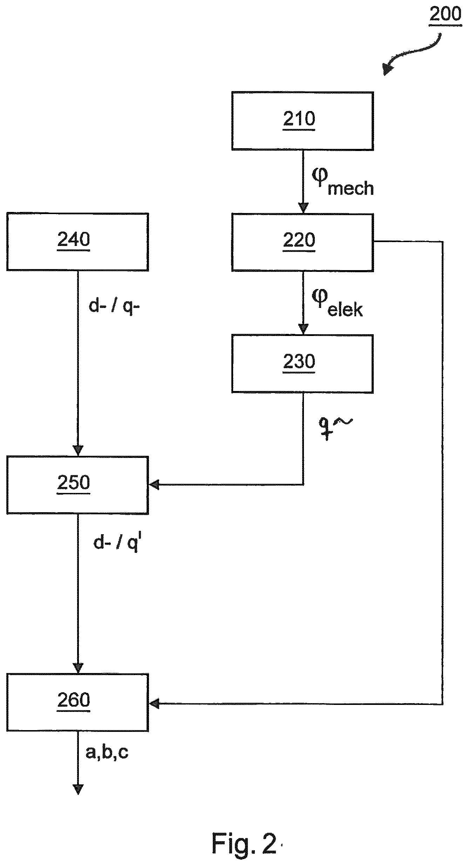

Fig. 2 zeigt einen schematischen Ablauf eines erfindungsgemäßen Verfahrens gemäß einer Ausführungsform 200.

In einem ersten Schritt wird eine mechanische Position des Rotors in Bezug auf den Stator bestimmt. Dies erfolgt vorzugsweise mittels eines mechanischen Winkels φ_{mech}. Die Bestimmung des mechanischen Winkels kann bspw. durch eine Lageerfassung erfolgen. Dies ist durch Block 210 angedeutet.

Anschließend wird der mechanische Winkel φ_{mech} in einen elektrischen Winkel φₑₗₑₖ umgerechnet. Dies kann ebenfalls durch die die Lageerfassung und in Abhängigkeit der mechanischen Position und der Polpaarzahl des Generators erfolgen. Dies ist durch Block 220 angedeutet.

Zudem wird in Abhängigkeit der mechanischen Position des Rotors, insbesondere in Abhängigkeit des elektrischen Winkels φₑₗₑₖ, ein Wechselanteil q~ bestimmt. Dies ist durch Block 230 angedeutet.

Ferner werden Gleichanteile für die rotorfesten d- und q-Koordinaten d- und q- für die zwei 3-phasigen Statorströme vorgegeben, bspw. mittels einer d/q-Transformation. Dies ist durch Block 240 angedeutet.

Anschließend wird der bestimmte Wechselanteil q~ auf den vorgegebenen Gleichanteil der q-Koordinate q- aufmoduliert, sodass eine modulierte q-Koordinate q' erzeugt wird, die einen Gleichanteil q- und einen Wechselanteil q~ aufweist. Dies ist durch Block 250 angedeutet.

Der aktive Gleichrichter selbst wird dann in Abhängigkeit der modulierten q-Koordinate q' und der d-Koordinate d- gesteuert. Dies kann bspw. mittels einer Rücktransformation der Koordinate d- und q' in 3-phasige Koordinaten a, b, c erfolgen. Dies ist durch Block 260 angedeutet.

In einer bevorzugten Ausführungsform wird der aktive Gleichrichter zusätzlich in Abhängigkeit des elektrischen Winkels φₑₗₑₖ gesteuert.

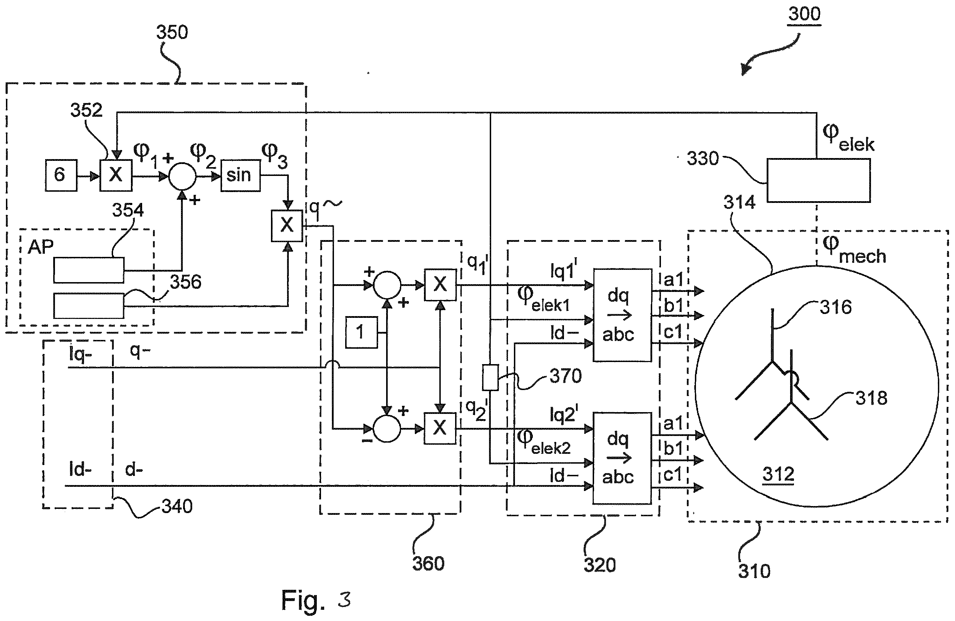

Fig. 3 zeigt einen schematischen Aufbau einer erfindungsgemäßen Steuereinheit einer Windenergieanlage gemäß einer Ausführungsform 300. Insbesondere zeigt Fig. 3 eine Struktur einer solchen Steuereinheit.

Die Windenergieanlage umfasst einen Generator 310. Der Generator umfasst einen mechanischen Stator 312 und einen mechanischen Rotor 314. Der Generator 310 ist dabei als Innenläufer ausgeführt, d.h. der Rotor 314 ist innerhalb des Stators 312 angeordnet.

Der mechanische Stator 312 weist zwei 3-phasige Wicklungssysteme auf, die elektrisch mit einem aktiven Gleichrichter verbunden und bevorzugt um 30° phasenverschoben sind.

Der Generator 310 ist somit ferner 6-phasig ausgebildet.

Die Ansteuerung des aktiven Gleichrichters bzw. des elektrischen Stranges der Windenergieanlage erfolgt über die Ansteuereinheit 320.

Dies Steuereinheit 320 selbst ist dabei dazu eingerichtet, eine erste Rücktransformation a₁, b₁, c₁ einer ersten modulierten q-Koordinate I_{q1}' und einer d-Koordinate d- und eines ersten elektrischen Lagesignals φₑₗₑₖ₁ für das erste 3-phasige Modul des aktiven Gleich-richters und eine zweite Rücktransformation a₂, b₂, c₂ einer zweiten modulierten q-Koordinate I_{q2}' und der d-Koordinate d- und eines zweiten elektrischen Lagesignals φₑₗₑₖ₂ für das zweite 3-phasige Modul des aktiven Gleichrichters auszuführen, wobei die zweite modulierte q-Koordinate I_{q2}' gegenüber der ersten modulieren q-Koordinate I_{q1'} um 180° phasenverschoben ist, und das zweite elektrische Lagesignal φₑₗₑₖ₂ gegenüber dem ersten elektrischen Lagesignal φₑₗₑₖ₁ um 30° phasenverschoben ist.

Zum Ausführen des erfindungsgemäßen Verfahrens ist ferner ein Lagemodul 330 vorgesehen, welches dazu eingerichtet ist, aus einer mechanischen Position φ_{mech} des Rotors 314 in Bezug auf den Stator 312 ein elektrisches Lagesignal φₑₗₑₖ auszugeben.

Zudem umfasst die Steuereinheit 300 ein Transformationsmodul 340, welches dazu eingerichtet ist, Gleichanteile für rotorfeste d- und q-Koordinaten d-, q- vorzugeben, insbesondere für die zwei 3-phasigen Statorströme des Generators 310.

Ferner umfasst die Steuereinheit 300 ein Dämpfungsmodul 350 zum Aufmodulieren wenigstens eines Wechselanteils q~ auf eine q-Koordinate q-, wobei der Wechselanteil q~ in Abhängigkeit des elektrischen Lagesignals φₑₗₑₖ bestimmt wird und das Dämpfungsmodul 350 so mit dem Transformationsmodul 340 verschaltet ist, dass eine modulierte q-Koordinate q' erzeugt wird, die einen Gleichanteil q- und einen Wechselanteil q~ aufweist, welche für die Ansteuereinheit bereitgestellt wird.

Das Dämpfungsmodul 350 selbst umfasst hierfür eine Multiplikation 352, die auf das elektrische Lagesignal φₑₗₑₖ wirkt, um ein verändertes elektrisches Lagesignal φ1 bereitzustellen. Hierfür wird das elektrische Lagesignal φₑₗₑₖ mit dem Faktor 6 multipliziert, um die Betriebsschwingung des Generators 310 der 12ten Harmonischen zu adressieren, also jener, die dem 12-fachen der elektrischen Frequenz des Generators 310 entsprechen.

Ferner umfasst das Dämpfungsmodul 350 einen Offset 354, der in Abhängigkeit einer Arbeitskennlinie AP der Windenergieanlage mittels einer Addition auf das elektrische Lagesignal auf das veränderte elektrische Lagesignal φ1 wirkt, um ein versetztes elektrisches Lagesignal φ2 bereitzustellen.

Zudem weist das Dämpfungsmodul 350 auch eine trigonometrische Funktion sin auf, die ein im Wesentlichen sinusförmiges Signal in Abhängigkeit des versetzten elektrischen Lagesignals φ2 bereitstellt. Dieses Signal kann auch als wechselndes elektrisches Lagesignal φ3 bezeichnet werden.

Ebenfalls weist das Dämpfungsmodul 350 eine Amplitudenmodifikation 356 auf, die in Abhängigkeit einer Arbeitskennlinie AP der Windenergieanlage auf das wechselnde elektrische Lagesignal φ3 wirkt, um den Wechselanteil q~ bereitzustellen.

Ferner umfasst die Steuereinheit 300 ein Phasenverschiebungsmodul 360 sowie einen Phasenverschieber 370, um den Wechselanteil q~ für die zwei phasenverschobenen elektrischen Statoren 316, 318 bereitzustellen.

Das Phasenverschiebungsmodul 360 ist hierzu dazu eingerichtet, die modulierte q-Koordinate q~ um einen vorbestimmten Betrag von 180° in der Phase zu verschieben, um eine erste modulierte q-Koordinate q₁' für den ersten 3-phasigen Statorstrom des ersten, 3-phasigen Wicklungssystems des Stators 316 und eine zweite modulierte q-Koordinate q₂' für den zweiten 3-phasigen Statorstrom des zweiten, 3-phasigen Wicklungssystems des Stators 318 bereitzustellen, wobei das erste Wicklungssystem 316 und das zweite Wicklungssystem 318 um 30° phasenverschoben sind.

Hierfür ist der Phasenverschieber 370 dazu eingerichtet, das elektrische Lagesignal φₑₗₑₖ um einen vorbestimmten Betrag, insbesondere um 30°, in der Phase zu verschieben und an der Ansteuereinheit 320 bereitzustellen.

Die Ansteuereinheit 320 selbst rücktransformiert dann die Größen I_{q1}', φₑₗₑₖ₁, I_{d}- zu den 3-phasigen Koordinaten a₁, b₁, c₁ und die Größen I_{q2}', φₑₗₑₖ₂ und I_{d}- zu den 3-phasigen Koordinaten a₂, b₂, c₂.

Für die Steuerung des aktiven Gleichrichters wird somit eine feldorientierte Regelung eingesetzt.

Diese erlaubt es, die Statorströme in rotorfesten d/q-Koordinaten vorzugeben.

Die Ströme Id- und Iq- sind somit im Wesentlichen Gleichgrößen.

Zudem wird ein 6-phasiger Generator 310 mit 2 um 30° versetzten Drehstromsystemen vorgeschlagen, wobei jedes System einzelne d/q-Transformationen aufweist.

Zur Steuerung sind dann die Größen I_{d1}', I_{q1}' für das eine System 316 sowie I_{d2}' und I_{q2}' für das andere, um 30°-versetzte System verfügbar.

Es wird somit vorgeschlagen, die drehmomentbildenden Komponenten der Ströme zu modulieren, und zwar so, dass damit die auftretenden Betriebsschwingungen mit einer Frequenz 12*f_el minimiert werden.

Der Kern dabei ist, dass die Ströme I_{q1}' und I_{q2}' nicht identisch mit der Frequenz der 12ten Harmonischen moduliert werden, sondern die Ströme der beiden Teilsysteme mit der Frequenz der 6ten Harmonischen zu modulieren. Die Phasenverschiebung der Modulation beträgt dabei 180°.

Hierdurch kann eine Verstetigung des Drehmomentes und eine Kompensation des Nutrastmomentes erreicht werden.

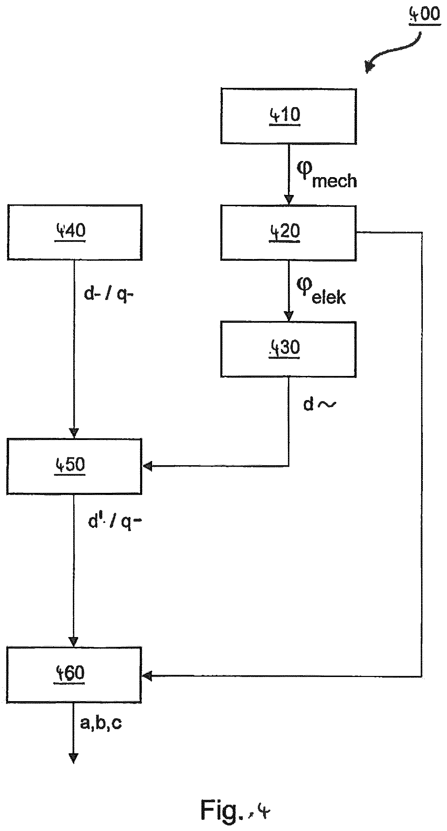

Fig. 4 zeigt einen schematischen Ablauf eines weiteren erfindungsgemäßen Verfahrens gemäß einer Ausführungsform 400.

In einem ersten Schritt wird eine mechanische Position des Rotors in Bezug auf den Stator bestimmt. Dies erfolgt vorzugsweise mittels eines mechanischen Winkels φmech. Die Bestimmung des mechanischen Winkels kann bspw. durch eine Lageerfassung erfolgen. Dies ist durch Block 410 angedeutet.

Anschließend wird der mechanische Winkel φmech in einen elektrischen Winkel φelek umgerechnet. Dies kann ebenfalls durch die die Lageerfassung und in Abhängigkeit der mechanischen Position und der Polpaarzahl des Generators erfolgen. Dies ist durch Block 420 angedeutet.

Zudem wird in Abhängigkeit der mechanischen Position des Rotors, insbesondere in Abhängigkeit des elektrischen Winkels φelek, ein Wechselanteil d~ bestimmt. Dies ist durch Block 430 angedeutet.

Ferner werden Gleichanteile für die rotorfesten d- und q-Koordinaten d- und q- für die zwei 3-phasigen Statorströme vorgegeben, bspw. mittels einer d/q-Transformation. Dies ist durch Block 440 angedeutet.

Anschließend wird der bestimmte Wechselanteil d~ auf den vorgegebenen Gleichanteil der d-Koordinate d- aufmoduliert bzw. aufaddiert, sodass eine veränderte bzw. modulierte d-Koordinate d' erzeugt wird, die einen Gleichanteil d- und einen Wechselanteil d~ aufweist. Dies ist durch Block 450 angedeutet.

Der aktive Gleichrichter selbst wird dann in Abhängigkeit der veränderte bzw. modulierten d-Koordinate d' und der q-Koordinate q- gesteuert. Dies kann bspw. mittels einer Rücktransformation der Koordinate d- und q' in 3-phasige Koordinaten a, b, c erfolgen. Dies ist durch Block 460 angedeutet.

Dieses Vorgehen kann bspw. auch anhand der nachstehenden Gleichungen beschrieben werden: ${i}_{q 1} = {i}_{q 11}$ ${i}_{d 1} = {i}_{d 11} + {i}_{d 6} sin \left(6β+{φ}_{d 6}\right)$ ${i}_{q 2} = {i}_{q 11}$ ${i}_{d 2} = {i}_{d 11} - {i}_{d 6} sin \left(6β+{φ}_{d 6}\right)$ ${i}_{a 1} = {i}_{q 11} cosβ + {i}_{d 11} sinβ + \frac{{i}_{d 6}}{2} cos \left(5β+{φ}_{d 6}\right) - \frac{{i}_{d 6}}{2} cos \left(7β+{φ}_{d 6}\right)$ ${i}_{a 2} = {i}_{q 11} cos \left(β-\frac{π}{6}\right) + {i}_{d 11} sin \left(β-\frac{π}{6}\right) - \frac{{i}_{d 6}}{2} cos \left(5β+\frac{π}{6}+{φ}_{d 6}\right) + \frac{{i}_{d 6}}{2} cos \left(7β-\frac{π}{6}+{φ}_{d 6}\right)$ wobei diese Modulation gezielt für die 12.te Harmonische ist.

In einer bevorzugten Ausführungsform wird der aktive Gleichrichter zusätzlich in Abhängigkeit des elektrischen Winkels φelek gesteuert.

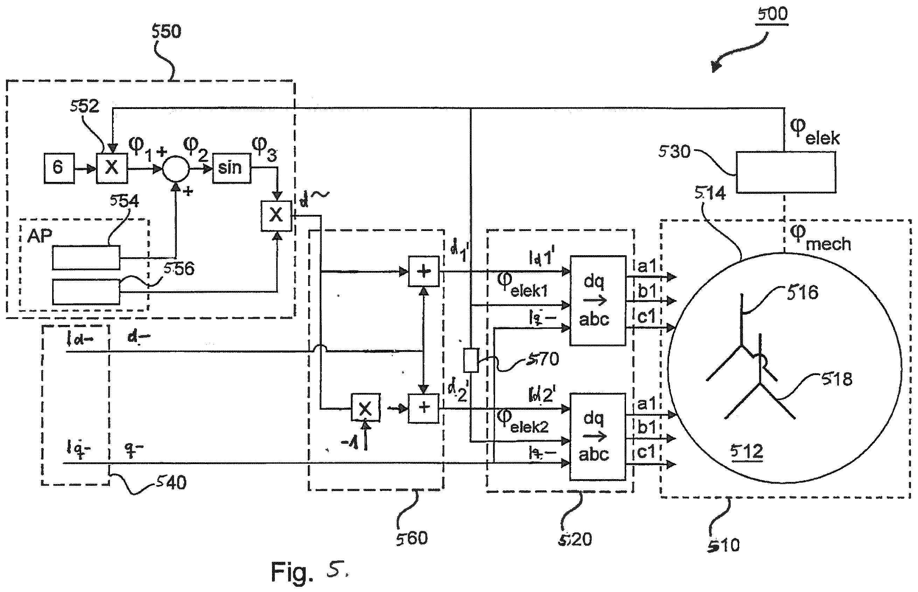

Fig. 5 zeigt einen schematischen Aufbau einer weiteren, erfindungsgemäßen Steuereinheit einer Windenergieanlage gemäß einer Ausführungsform 500. Insbesondere zeigt Fig. 5 eine Struktur einer solchen Steuereinheit.

Die Windenergieanlage umfasst einen Generator 510. Der Generator umfasst einen mechanischen Stator 512 und einen mechanischen Rotor 514. Der Generator 510 ist dabei als Innenläufer ausgeführt, d.h. der Rotor 514 ist innerhalb des Stators 512 angeordnet.

Der mechanische Stator 512 weist zwei 3-phasige Wicklungssysteme auf, die elektrisch mit einem aktiven Gleichrichter verbunden und bevorzugt um 30° phasenverschoben sind.

Der Generator 510 ist somit ferner 6-phasig ausgebildet.

Die Ansteuerung des aktiven Gleichrichters bzw. des elektrischen Stranges der Windenergieanlage erfolgt über die Ansteuereinheit 520.

Dies Steuereinheit 520 selbst ist dabei dazu eingerichtet, eine erste Rücktransformation a1, b1, c1 einer ersten veränderten bzw. modulierten d-Koordinate Id1' und einer q-Koordinate q- und eines ersten elektrischen Lagesignals φelek1 für das erste 3-phasige Modul des aktiven Gleich-richters und eine zweite Rücktransformation a2, b2, c2 einer zweiten veränderten bzw. modulierten d-Koordinate Id2' und der q-Koordinate q- und eines zweiten elektrischen Lagesignals φelek2 für das zweite 3-phasige Modul des aktiven Gleichrichters auszuführen, wobei die zweite veränderte bzw. modulierte d-Koordinate Id2' gegenüber der ersten veränderten bzw. modulieren d-Koordinate Id1' um 180° phasenverschoben ist, und das zweite elektrische Lagesignal φelek2 gegenüber dem ersten elektrischen Lagesignal φelek1 um 30° phasenverschoben ist.

Zum Ausführen des erfindungsgemäßen Verfahrens ist ferner ein Lagemodul 530 vorgesehen, welches dazu eingerichtet ist, aus einer mechanischen Position φmech des Rotors 514 in Bezug auf den Stator 512 ein elektrisches Lagesignal φelek auszugeben.

Zudem umfasst die Steuereinheit 300 ein Transformationsmodul 540, welches dazu eingerichtet ist, Gleichanteile für rotorfeste d- und q-Koordinaten d-, q- vorzugeben, insbesondere für die zwei 3-phasigen Statorströme des Generators 510.

Ferner umfasst die Steuereinheit 500 ein Dämpfungsmodul 550 zum Aufmodulieren und/oder zum Aufaddieren wenigstens eines Wechselanteils d~ auf eine d-Koordinate d-, wobei der Wechselanteil d~ in Abhängigkeit des elektrischen Lagesignals φelek bestimmt wird und das Dämpfungsmodul 550 so mit dem Transformationsmodul 540 verschaltet ist, dass eine veränderte bzw. modulierte d-Koordinate d' erzeugt wird, die einen Gleichanteil d- und einen Wechselanteil d~ aufweist, welche für die Ansteuereinheit bereitgestellt wird.

Das Dämpfungsmodul 550 selbst umfasst hierfür eine Multiplikation 552, die auf das elektrische Lagesignal φelek wirkt, um ein verändertes elektrisches Lagesignal φ1 bereitzustellen. Hierfür wird das elektrische Lagesignal φelek mit dem Faktor 6 multipliziert, um die Betriebsschwingung des Generators 510 der 12ten Harmonischen zu adressieren, also jener, die dem 12-fachen der elektrischen Frequenz des Generators 510 entsprechen.

Ferner umfasst das Dämpfungsmodul 550 einen Offset 554, der in Abhängigkeit einer Arbeitskennlinie AP der Windenergieanlage mittels einer Addition auf das elektrische Lagesignal auf das veränderte elektrische Lagesignal φ1 wirkt, um ein versetztes elektrisches Lagesignal φ2 bereitzustellen.

Zudem weist das Dämpfungsmodul 550 auch eine trigonometrische Funktion sin auf, die ein im Wesentlichen sinusförmiges Signal in Abhängigkeit des versetzten elektrischen Lagesignals φ2 bereitstellt. Dieses Signal kann auch als wechselndes elektrisches Lage-signal φ3 bezeichnet werden.

Ebenfalls weist das Dämpfungsmodul 550 eine Amplitudenmodifikation 556 auf, die in Abhängigkeit einer Arbeitskennlinie AP der Windenergieanlage auf das wechselnde elektrische Lagesignal φ3 wirkt, um den Wechselanteil d~ bereitzustellen.

Ferner umfasst die Steuereinheit 500 ein Phasenverschiebungsmodul 560 sowie einen Phasenverschieber 570, um den Wechselanteil d~ für die zwei phasenverschobenen elektrischen Statoren 516, 518 bereitzustellen.

Das Phasenverschiebungsmodul 560 ist hierzu dazu eingerichtet, die veränderte bzw. modulierte d-Koordinate d~ um einen vorbestimmten Betrag von 180° in der Phase zu verschieben, um eine erste veränderte bzw. modulierte d-Koordinate d1' für den ersten 3-phasigen Statorstrom des ersten, 3-phasigen Wicklungssystems des Stators 516 und eine zweite veränderte bzw. modulierte d-Koordinate d2' für den zweiten 3-phasigen Statorstrom des zweiten, 3-phasigen Wicklungssystems des Stators 518 bereitzustellen, wobei das erste Wicklungssystem 516 und das zweite Wicklungssystem 518 um 30° phasenverschoben sind.

Hierfür ist der Phasenverschieber 570 dazu eingerichtet, das elektrische Lagesignal φelek um einen vorbestimmten Betrag, insbesondere um 30°, in der Phase zu verschieben und an der Ansteuereinheit 520 bereitzustellen.

Die Ansteuereinheit 320 selbst rücktransformiert dann die Größen Id1', φelek1, Iq- zu den 3-phasigen Koordinaten a1, b1, c1 und die Größen Id2', φelek2 und Iq- zu den 3-phasigen Koordinaten a2, b2, c2.

Für die Steuerung des aktiven Gleichrichters wird somit eine feldorientierte Regelung eingesetzt.

Diese erlaubt es, die Statorströme in rotorfesten d/q-Koordinaten vorzugeben.

Die Ströme Id- und Iq- sind somit im Wesentlichen Gleichgrößen.

Zudem wird ein 6-phasiger Generator 510 mit 2 um 30° versetzten Drehstromsystemen vorgeschlagen, wobei jedes System einzelne d/q-Transformationen aufweist.

Zur Steuerung sind dann die Größen Iq-, Id1' für das eine System 516 sowie Iq- und Id2' für das andere, um 30°-versetzte System verfügbar.

Es wird somit vorgeschlagen, die drehmomentbildenden Komponenten der Ströme zu verändern bzw. modulieren, und zwar so, dass damit die auftretenden Betriebsschwingungen mit einer Frequenz 12*f_el minimiert werden.

Der Kern dabei ist, dass die Ströme Id1' und Id2' nicht identisch mit der Frequenz der 12ten Harmonischen verändert bzw. moduliert werden, sondern die Ströme der beiden Teilsysteme mit der Frequenz der 6ten Harmonischen zu verändern bzw. zu modulieren. Die Phasenverschiebung der Modulation beträgt dabei 180°.

Das Resultat ist die Entstehung zusätzlicher rotierenden Drehfelder in Radialrichtung im Luftspalt des Generators mit der elektrischen Frequenz der 5.ten und 7.ten Harmonischen, die letztendlich auf die 12.ten Harmonische der vorhandenen magnetischen Radialkräfte Auswirkung zeigt.

Hierdurch können die Schallemissionen des Generators deutlich minimiert werden.

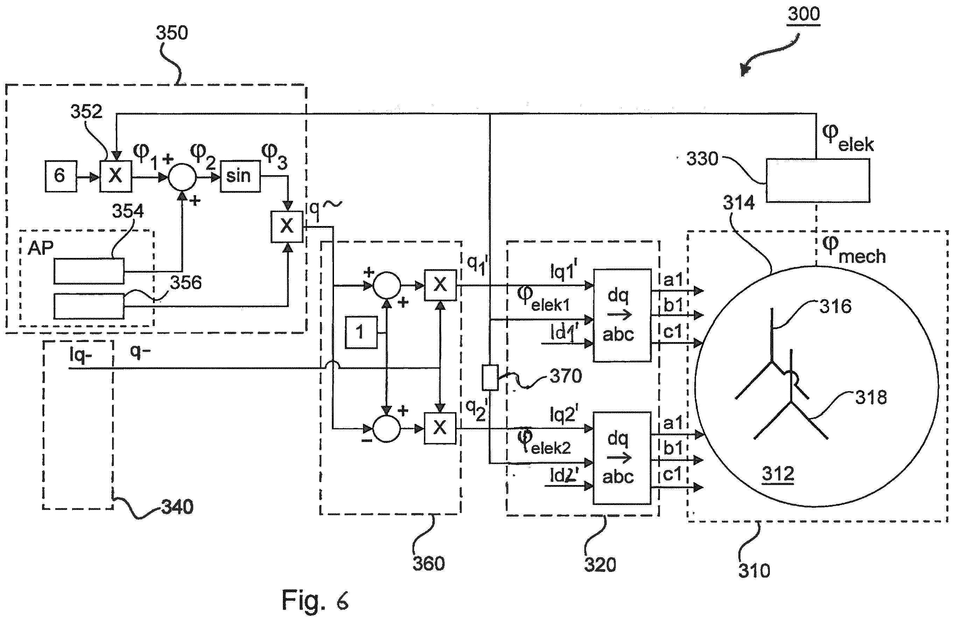

Fig. 6 zeigt einen schematischen Aufbau einer alternativen erfindungsgemäßen Steuereinheit einer Windenergieanlage gemäß einer Ausführungsform.

Insbesondere zeigt Fig. 6 eine alternative Ausgestaltung zu der in Fig. 3 gezeigten Steuereinheit.

Hierbei werden insbesondere die Größen der d-Komponente ebenfalls durch ein vorstehend beschriebenes Verfahren bereitgestellt, also Id1' und Id2'.

Die Steuereinheit 500 ist somit dazu eingerichtet, beide vorstehend beschriebenen Verfahren auszuführen und insbesondere sowohl eine modulierte d-Komponente als auch eine modulierte q-Komponente bereitzustellen.

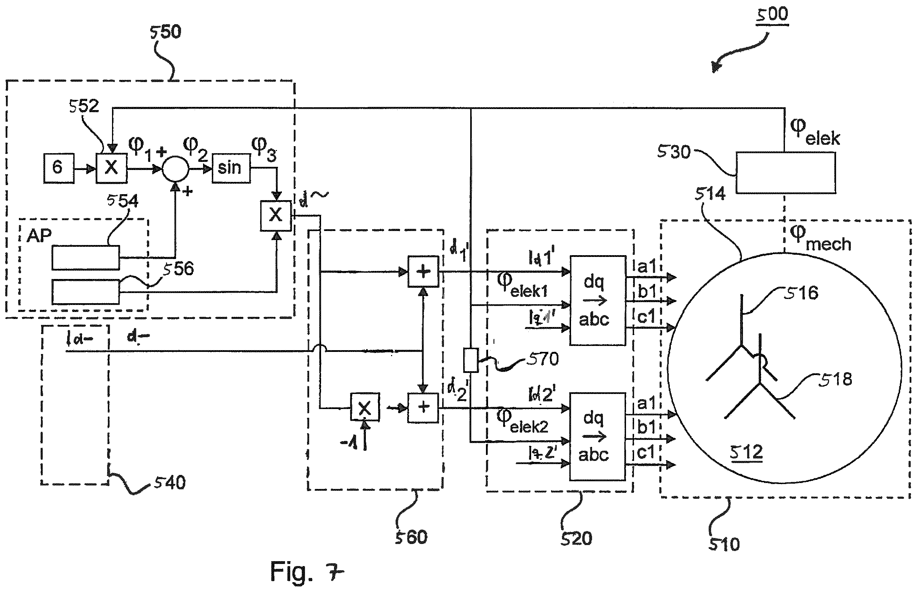

Fig. 7 zeigt einen schematischen Aufbau einer weiteren, alternativen erfindungs-gemäßen Steuereinheit einer Windenergieanlage gemäß einer Ausführungsform.

Insbesondere zeigt Fig. 7 eine alternative Ausgestaltung zu der in Fig. 5 gezeigten Steuereinheit.

Hierbei werden insbesondere die Größen der q-Komponente ebenfalls durch ein vorstehend beschriebenes Verfahren bereitgestellt, also Iq1' und Iq2'.

Die Steuereinheit 500 ist somit dazu eingerichtet, beide vorstehend beschriebenen Verfahren auszuführen und insbesondere sowohl eine modulierte d-Komponente als auch eine modulierte q-Komponente bereitzustellen.

Die Figuren 6 und 7 zeigen also insbesondere eine gemeinsame Verwendung der vorstehend beschriebenen Verfahren mittels einer Steuereinheit, die insbesondere dazu eingerichtet ist, die in den Figuren 2 und 4 gezeigten Verfahren auszuführen.

## Patentansprüche

1. Verfahren zum Steuern eines mit einem Stator (512) eines Generators (510) einer Windenergieanlage (100) elektrisch verbundenen aktiven Gleichrichters mittels einer feldorientierten Regelung, wobei der Generator (510) einen Stator (512) mit einer Drehachse aufweist, um die der Rotor (514) gelagert ist:
- Bestimmen einer mechanischen Position des Rotors (514) in Bezug auf den Stator (512),
- Vorgeben von Gleichanteilen von rotorfesten d- und q-Koordinaten fürwenigstens einen 3-phasigen Statorstrom,
- Bestimmen eines Wechselanteils für die d-Koordinate wenigstens in Abhängigkeit der mechanischen Position des Rotors (514),
- Aufaddieren des bestimmten Wechselanteils der d-Koordinate auf den vorgegebenen Gleichanteil der d-Koordinate so, dass eine veränderte d-Koordinate erzeugt wird, die einen Gleichanteil und einen Wechselanteil aufweist,
- Steuern des aktiven Gleichrichters wenigstens in Abhängigkeit der veränderten d-Koordinate und bevorzugt in Abhängigkeit der d-Koordinate und/oder der q-Koordinate,
**gekennzeichnet dadurch, dass** das Bestimmen des Wechselanteils in einem Dämpfungsmodul (550) erfolgt, wobei
- das Dämpfungsmodul (550) eine Multiplikation (552) aufweist, die auf das elektrische Lagesignal (φₑₗₑk) wirkt, um insbesondere ein verändertes elektrisches Lagesignal (φ₁) bereitzustellen, wobei
- das Bestimmen des Wechselanteils der d-Koordinate zusätzlich mittels eines Offsets (554) erfolgt, der in Abhängigkeit einer Arbeitskennlinie des Generators (510) mittels einer Addition auf das elektrische Lagesignal (φelek) wirkt, insbesondere auf das veränderte elektrische Lagesignal (φ1), um ein versetztes elektrisches Lagesignal (φ2) bereitzustellen.

2. Verfahren nach Anspruch 1, ferner umfassend den Schritt:
- Ermitteln eines elektrischen Winkels in Abhängigkeit der mechanischen Position des Rotors (310, 510) und der Polpaarzahl des Generators (310, 510), wobei
- das Steuern des aktiven Gleichrichters zusätzlich in Abhängigkeit des elektrischen Winkels erfolgt.

3. Verfahren nach einem der vorstehenden Ansprüche, wobei
- der Generator (310, 510) ein erstes und ein zweites, insbesondere um 30° zu dem ersten versetzten, 3-phasiges Wicklungssystem umfasst, wobei
- das erste 3-phasige Wicklungssystem (316, 516) in Abhängigkeit eines ersten elektrischen Winkels gesteuert wird, und
- das zweite 3-phasige Wicklungssystem (318, 518) in Abhängigkeit eines zweiten elektrischen Winkels gesteuert wird, wobei der zweite elektrische Winkel von dem ersten elektrischen Winkel verschieden ist, insbesondere 30° zu dem ersten elektrischen Winkel phasenverschoben ist.

4. Verfahren nach Anspruch 3, wobei
- das Aufaddieren mittels n-ten harmonischen elektrischen Schwingung erfolgt, um eine m-te harmonische, mechanische Schwingung des Generators zu minimieren, wobei n = m / 2 ist, bevorzugt mit m = 12.

5. Verfahren nach einem der vorstehenden Ansprüche, ferner umfassend den Schritt:
- Phasenverschieben eines Wechselanteils der d-Koordinate um einen vorbestimmten Phasenwinkel, wobei der Phasenwinkel bevorzugt 180° beträgt, und/oder
- Phasenverschieben des elektrischen Winkels um einen vorbestimmten Phasenwinkel, wobei der Phasenwinkel bevorzugt 30° beträgt.

6. Verfahren nach einem der vorstehenden Ansprüche, wobei
- der aktive Gleichrichter ein erstes 3-phasiges Modul und ein zweites 3-phasiges Modul umfasst, wobei
- das erste 3-phasige Modul einem ersten elektrischen Stator zugeordnet ist und
- das zweite 3-phasige Modul einem zweiten elektrischen Stator zugeordnet ist.

7. Verfahren nach einem der vorstehenden Ansprüche, wobei
- das Steuern des aktiven Gleichrichters mittels abc-Koordinaten erfolgt, die aus der veränderten d-Koordinate rücktransformiert werden, umfassend wenigstens eine a-Koordinate, die zu einer Entstehung zusätzlicher rotierender Drehfelder führt, insbesondere in radialer Richtung im Luftspalt des Generators, bevorzugt mit der 5. und/oder 7. Harmonischen der elektrischen Frequenz.

8. Steuereinheit (500) einer Windenergieanlage (100), wobei die Windenergieanlage (100) wenigstens einen Generator (510) aufweist, der einen Stator (512) mit einer Drehachse umfasst, um die ein Rotor (514) gelagert ist, wobei
der Stator elektrisch mit einem aktiven Gleichrichter verbunden ist, welcher über eine Ansteuereinheit (520) ansteuerbar ist, wenigstens umfassend:
- ein Lagemodul (530) zum Bestimmen einer mechanischen Position (φ_{mech}) des Rotors (514) in Bezug auf den Stator (512), welche ein elektrisches Lagesignal (φₑₗₑk) ausgibt,
- ein Transformationsmodul (540) zum Vorgeben von Gleichanteilen rotorfester d- und q-Koordinaten (d-, q-) für wenigstens einen 3-phasigen Statorstrom, und
- ein Dämpfungsmodul (550) zum Aufaddieren wenigstens eines Wechselanteils (d~) auf eine d-Koordinate (d-), wobei
der Wechselanteil (d~) in Abhängigkeit des elektrischen Lagesignals (φelek) bestimmt wird und
- das Dämpfungsmodul (550) so mit dem Transformationsmodul (540) verschaltet ist, dass wenigstens eine veränderte d-Koordinate (d1', d2') erzeugt wird, die einen Gleichanteil (d-) und einen Wechselanteil (d~) aufweist, welche für die Ansteuereinheit (520) bereitgestellt wird, wobei
- das Dämpfungsmodul (550) eine Multiplikation (552) aufweist, die auf das elektrische Lagesignal (φₑₗₑk) wirkt, um insbesondere ein verändertes elektrisches Lagesignal (φ₁) bereitzustellen und
- das Dämpfungsmodul (550) einen Offset (554) aufweist, der in Abhängigkeit einer Arbeitskennlinie (AP) der Windenergieanlage mittels einer Addition auf das elektrische Lagesignal (φₑₗₑk) wirkt, insbesondere auf das veränderte elektrische Lagesignal (φ₁), um ein versetztes elektrisches Lagesignal (φ₂) bereitzustellen.

9. Steuereinheit (300, 500) Anspruch 8, wobei
- das Dämpfungsmodul (350, 550) eine trigonometrische Funktion (sin) umfasst, die ein im Wesentlichen sinusförmiges Signal in Abhängigkeit des elektrischen Lagesignals ausgibt, insbesondere in Abhängigkeit des versetzten elektrischen Lagesignals (φ₂), um ein wechselndes elektrisches Lagesignal (φ₃) bereitzustellen.

10. Steuereinheit (300, 500) nach einem der Ansprüche 8 - 9, wobei
- das Dämpfungsmodul (350, 550) eine Amplitudenmodifikation (356, 556) aufweist, die in Abhängigkeit einer Arbeitskennlinie (AP) der Windenergieanlage auf das elektrische Lagesignal (φₑₗₑk) wirkt, insbesondere auf das wechselnde elektrische Lagesignal (φ₃), um den Wechselanteil (q~, d~) bereitzustellen.

11. Steuereinheit (300, 500) nach einem der Ansprüche 8 - 10, ferner umfassend:
- einen Phasenverschieber (370, 570), der dazu eingerichtet ist, das elektrische Lagesignal (φₑₗₑk) um einen vorbestimmten Betrag, insbesondere um 30°, in der Phase zu verschieben und an der Ansteuereinheit (320, 520) bereitzustellen.

12. Steuereinheit (300, 500) nach einem der Ansprüche 8 - 11, ferner umfassend:
- ein Phasenverschiebungsmodul (560), welches dazu eingerichtet ist, die veränderte d-Koordinate (d~) mit einen vorbestimmten Betrag zu multiplizieren, insbesondere mit -1, insbesondere um eine erste veränderte d-Koordinate (d1') für einen ersten 3-phasigen Statorstrom eines ersten 3-phasigen Wicklungssystems (516) der Windenergieanlage und eine zweite veränderte d-Koordinate (d2') für einen zweiten 3-phasigen Statorstrom eines zweiten 3-phasigen Wicklungssystems (518) der Windenergieanlage bereitzustellen, wobei das erste 3-phasige Wicklungssystem (516) und das zweite 3-phasige Wicklungssystem (518) bevorzugt um 30° phasenverschoben sind.

13. Steuerung einer Windenergieanlage, umfassend eine Steuereinheit nach einem der Ansprüche 8 bis 12.

14. Windenergieanlage (100) umfassend eine Steuereinheit, die dazu eingerichtet ist, ein Verfahren nach einem der Ansprüche 1 bis 7 auszuführen, oder eine Steuereinheit (300, 500) nach einem der Ansprüche 8-12.

15. Windenergieanlage nach Anspruch 14**.** umfassend:
- einen Generator (310, 510), der einen Stator (312, 512) mit einer Drehachse aufweist und einen um die Drehachse gelagerten Rotor, wobei der Stator elektrisch mit einem aktiven Gleichrichter verbunden ist, welcher über eine Ansteuereinheit ansteuerbar ist, und
- eine Ansteuereinheit (320, 520) für den aktiven Gleichrichter, wobei
- der Generator zwei um 30° phasenverschobene Statoren (316, 318, 516, 518) aufweist, die jeweils mit einem 3-phasigen Modul des aktiven Gleichrichters verbunden sind, und
- die Ansteuereinheit (520) dazu eingerichtet ist,
- eine erste Rücktransformation (a1, b1, c1) einer ersten veränderten d-Koordinate (Id1') und einer q-Koordinate (Iq-) und eines ersten elektrischen Lagesignals (φelek1) für das erste 3-phasige Modul des aktiven Gleichrichters auszuführen, und
- eine zweite Rücktransformation (a2, b2, c2) einer zweiten veränderten d-Koordinate (Id2') und der d-Koordinate (Iq-) und eines zweiten elektrischen Lagesignals (φelek2) für das zweite 3-phasige Modul des aktiven Gleichrichters auszuführen, wobei
- die zweite veränderte d-Koordinate (Id2') gegenüber der ersten veränderten d-Koordinate (Id1') um 180° phasenverschoben ist, und
- das zweite elektrische Lagesignal (φelek2) gegenüber dem ersten elektrischen Lagesignal (φelek1) um 30° phasenverschoben ist.

## Claims

1. A method for controlling, by means of field-orientated closed-loop control, an active rectifier which is electrically connected to a stator (512) of a generator ( 510) of a wind turbine (100), wherein the generator (510) has a stator 512) with a rotational axis about which the rotor (314, 514) is mounted:
- determining a mechanical position of the rotor (514) with respect to the stator (512),
- predefining DC components of rotor-fixed d- and q coordinates for at least one 3-phase stator current,
- determining an AC component for the q coordinate and/or the d coordinate at least as a function of the mechanical position of the rotor (514),
- adding the determined AC component of the d coordinate to the predefined DC component of the q coordinate and/or of the d coordinate, so that a changed d coordinate is generated which has a DC component and an AC component,
- controlling the active rectifier at least as a function of the changed d coordinate and preferably as a function of the d-coordinate and/or of the q coordinate,
**characterized in that**, that the alternating component is determined in a damping module (550), wherein
- the damping module (550) has a multiplication means (552) which acts on the electrical position signal (φₑₗₑk), in order, in particular, to make available a changed electrical position signal (φ₁), wherein
- the AC component for the q coordinate and/or the d coordinate are additionally determined as a function of a working characteristic curve of the generator (510).

2. The method as claimed in claim 1, further comprising the step:
- acquiring an electrical angle as a function of the mechanical position of the rotor (310, 510) and the number of pole pairs of the generator (310, 510), wherein
- the active rectifier is additionally controlled as a function of the electrical angle.

3. The method as claimed in one of the preceding claims, wherein
- the generator (310, 510) comprises a first 3-phase winding system and a second 3-phase winding system which is in particular offset by 30° with respect to the first, wherein
- the first 3-phase winding system (316, 516) is controlled as a function of a first electrical angle, and
- the second 3-phase winding system (318, 518) is controlled as a function of a second electrical angle, wherein the second electrical angle is different from the first electrical angle, and is phase-shifted, in particular by 30°, with respect to the first electrical angle.

4. The method as claimed in claim 3, wherein
- the addition are/is carried out by means of n-th harmonic electrical oscillation, in order to minimize an m-th harmonic, mechanical oscillation of the generator, wherein n = m / 2, preferably where m = 12.

5. The method as claimed in one of the preceding claims, further comprising the step:
- phase shifting an AC component of the d coordinate by a predetermined phase angle, wherein the phase angle is preferably 180°, and/or
- phase shifting the electrical angle by a predetermined phase angle, wherein the phase angle is preferably 30°.

6. The method as claimed in one of the preceding claims, wherein
- the active rectifier comprises a first 3-phase module and a second 3-phase module, wherein
- the first 3-phase module is assigned to a first electrical stator, and
- the second 3-phase module is assigned to a second electrical stator.

7. The method as claimed in one of the preceding claims, wherein
- the active rectifier is controlled by means of abc coordinates which are back-transformed from the changed d coordinate, comprising at least one a coordinate which causes additional rotating fields to be produced, in particular in the radial direction in the air gap of the generator, preferably with the 5^{th} and/or 7^{th} harmonic of the electrical frequency.

8. A control unit (500) of a wind turbine (100), wherein the wind turbine (100) has at least one generator (510) which comprises a stator (512) with a rotational axis about which a rotor (514) is mounted, wherein the stator is electrically connected to an active rectifier which can be actuated by means of an actuation unit (520), at least comprising:
- a position module (530) for determining a mechanical position (φ_{mech}) of the rotor (514) with respect to the stator (512), which outputs an electrical position signal (φₑₗₑk),
- a transformation module (540) for predefining DC components of rotor fixed d and q coordinates (d-, q-) for at least one 3-phase stator current, and
- a damping module (550) for adding at least one DC component (d~) to a d component (d-), wherein
- the AC component (d~) is determined as a function of the electrical position signal (φₑₗₑk), and
- the damping module (550) is connected to the transformation module (540) in such a way that at least one changed d coordinate (d1', d2') is generated which has a DC component (d-) and an AC component (d~) and which is made available for the actuation unit (520), wherein
- the damping module (550) has a multiplication means (552) which acts on the electrical position signal (φₑₗₑk), in order, in particular, to make available a changed electrical position signal (φ₁), and
- the damping module (550) has an offset (554) which acts on the electrical position signal (φₑₗₑk), in particular on the changed electrical position signal (φ₁), as a function of a working characteristic curve (AP) of the wind turbine by means of addition, in order to make available an offset electrical position signal (φ₂).

9. The control unit (300, 500) according to claim 8, wherein
- the damping module (350, 550) comprises a trigonometric function (sin) which outputs an essentially sinusoidal signal as a function of the electrical position signal, in particular as a function of the offset electrical position signal (φ₂), in order to make available a changing electrical position signal (φ₃).

10. The control unit (300, 500) according to claims 8 - 9, wherein
- the damping module (350, 550) has an amplitude modification means (356, 556) which acts on the electrical position signal (φₑₗₑk), in particular on the changing electrical position signal (φ₃), as a function of a working characteristic curve (AP) of the wind turbine, in order to make available the AC component (q~, d~).

11. The control unit (300, 500) as claimed in one of the preceding claims, further comprising:
- a phase shifter (370, 570) which is configured to shift the electrical position signal (φₑₗₑk) by a predetermined absolute value, in particular by 30°, in its phase, and to make it available at the actuation unit (320, 520).

12. The control unit (300, 500) according to claims 8 - 11, further comprising:
- a phase shifting module (560) which is configured to multiply the changed d coordinate (d~) by a predetermined absolute value, in particular by -1, in particular by a first changed d coordinate (d1') for a first 3-phase stator current of a first 3-phase winding system (516) of the wind turbine and a second changed d coordinate (d2') for a second 3-phase stator current of a second 3-phase winding system (518) of the wind turbine, wherein the first 3-phase winding system (516) and the second 3-phase winding system (518) are preferably phase shifted by 30°.

13. A control system of a wind turbine, comprising a control unit as claimed in one of claims 8 to 12.

14. A wind turbine (100) comprising a control unit which is configured to carry out a method as claimed in claims 1 to 7, or a control unit (300, 500) as claimed in claims 8 to 12.

15. The wind turbine as claimed in claim 14, comprising:
- a generator (310, 510) which has a stator (312, 512) with a rotational axis and a rotor which is mounted about the rotational axis, wherein the stator is electrically connected to an active rectifier which can be actuated by means of an actuation unit, and
- a actuation unit (320, 520) for the active rectifier, wherein the generator comprises two stators (316, 318, 516, 518) which are phase-shifted by 30° relative to each other and which are each connected to a 3-phase module of the active rectifier, and
- the actuation unit (520) is configured
- to carry out a first reverse transformation (a1, b1, c1) of a first changed d coordinate (Id1') and of a q coordinate (Iq-) and of a first electrical position signal (φelek1) for the first 3-phase module of the active rectifier, and
- a second reverse transformation (a2, b2, c2) of a second changed d coordinate (Id2') and of the d coordinate (Iq-) and of a second electrical position signal (φelek2) for the second 3-phase module of the active rectifier, wherein
- the second changed d coordinate (Id2') is phase shifted by 180° with respect to the first changed d coordinate (Id1'), and
- the second electrical position signal (φelek2) is phase shifted by 30° with respect to the first electrical position signal (φelek1).

## Revendications

1. Procédé de commande d'un redresseur actif relié électriquement à un stator (512) d'un générateur (510) d'une éolienne (100) au moyen d'une régulation à orientation de champ, dans lequel le générateur (510) présente un stator (512) avec un axe de rotation autour duquel le rotor (514) est monté :
- de détermination d'une position mécanique du rotor (514) par rapport au stator (512),
- de prédéfinition de composantes continues de coordonnées d et q solidaires du rotor pour au moins un courant de stator triphasé,
- de détermination d'une composante alternative pour la coordonnée d au moins en fonction de la position mécanique du rotor (514),
- d'addition de la composante alternative déterminée de la coordonnée d à la composante continue prédéfinie de la coordonnée d de sorte qu'une coordonnée d modifiée est produite, qui présente une composante continue et une composante alternative,
- de commande du redresseur actif au moins en fonction de la coordonnée d modifiée et de préférence en fonction de la coordonnée d et/ou de la coordonnée q,
**caractérisé en ce que** la détermination de la composante alternative s'effectue dans un module d'amortissement (550), dans lequel
- le module d'amortissement (550) présente une multiplication (552) qui
agit sur le signal de situation électrique (ϕₑₗₑk) pour fournir en particulier un signal de situation électrique modifié (ϕ1), dans lequel
- la détermination de la composante alternative de la coordonnée d s'effectue en plus au moyen d'un décalage (554) qui agit en fonction d'une courbe caractéristique de travail du générateur (510) au moyen d'une addition sur le signal de situation électrique (ϕelek), en particulier sur le signal de situation électrique modifié (ϕ1), pour fournir un signal de situation électrique décalé (ϕ2).

2. Procédé selon la revendication 1, comprenant en outre l'étape :
- de détermination d'un angle électrique en fonction de la position mécanique du rotor (310, 510) et du nombre de paires de pôles du générateur (310, 510), dans lequel
- la commande du redresseur actif s'effectue en plus en fonction de l'angle électrique.

3. Procédé selon l'une quelconque des revendications précédentes, dans lequel
- le générateur (310, 510) comprend un premier et un second système d'enroulement triphasé, en particulier décalé de 30° par rapport au premier, dans lequel
- le premier système d'enroulement triphasé (316, 516) est commandé en fonction d'un premier angle électrique, et
- le second système d'enroulement triphasé (318, 518) est commandé en fonction d'un second angle électrique, dans lequel le second angle électrique est différent du premier angle électrique, en particulier est déphasé de 30° par rapport au premier angle électrique.

4. Procédé selon la revendication 3, dans lequel
- l'addition s'effectue au moyen d'une oscillation électrique harmonique, de rang n, afin de minimiser une oscillation mécanique harmonique, de rang m, du générateur, dans lequel n = m/2, de préférence avec m = 12.

5. Procédé selon l'une quelconque des revendications précédentes, comprenant en outre l'étape :
- de déphasage d'une composante alternative de la coordonnée d d'un angle de phase prédéterminé, dans lequel l'angle de phase est de préférence de 180°, et/ou
- de déphasage de l'angle électrique d'un angle de phase prédéterminé, dans lequel l'angle de phase est de préférence de 30°.

6. Procédé selon l'une quelconque des revendications précédentes, dans lequel
- le redresseur actif comprend un premier module triphasé et un second module triphasé, dans lequel
- le premier module triphasé est affecté à un premier stator électrique et
- le second module triphasé est affecté à un second stator électrique.

7. Procédé selon l'une quelconque des revendications précédentes, dans lequel
- la commande du redresseur actif s'effectue au moyen de coordonnées abc, qui sont transformées par transformée inverse à partir de la coordonnée d modifiée, comprenant au moins une coordonnée a, qui entraîne une formation de champs tournants rotatifs supplémentaires, en particulier dans la direction radiale dans l'entrefer du générateur, de préférence avec les 5^{ème} et/ou 7^{ème} harmoniques de la fréquence électrique.

8. Unité de commande (500) d'une éolienne (100), dans laquelle l'éolienne (100) présente au moins un générateur (510) qui comprend un stator (512) avec un axe de rotation autour duquel est monté un rotor (514), dans laquelle
le stator est relié électriquement à un redresseur actif qui peut être commandé par une unité de commande (520), comprenant au moins :
- un module de situation (530) pour déterminer une position mécanique (ϕ_{mech}) du rotor (514) par rapport au stator (512) qui émet un signal de situation électrique (ϕₑₗₑk),
- un module de transformée (540) pour prédéfinir des composantes continues de coordonnées d et q solidaires du rotor (d-, q-) pour au moins un courant de stator triphasé, et
- un module d'amortissement (550) pour additionner au moins une composante alternative (d~) à une coordonnée d (d-), dans laquelle
- la composante alternative (d~) est déterminée en fonction du signal de situation électrique (ϕₑₗₑk) et
- le module d'amortissement (550) est connecté au module de transformée (540) de sorte qu'au moins une coordonnée d modifiée (d1', d2') est produite, qui présente une composante continue (d-) et une composante alternative (d~) qui est fournie pour l'unité de commande (520), dans laquelle
- le module d'amortissement (550) présente une multiplication (552) qui agit sur le signal de situation électrique (ϕₑₗₑk) pour fournir en particulier un signal de situation électrique modifié (ϕ1) et
- le module d'amortissement (550) présente un décalage (554) qui agit en fonction d'une courbe caractéristique de travail (AP) de l'éolienne au moyen d'une addition sur le signal de situation électrique (ϕₑₗₑk), en particulier sur le signal de situation électrique modifié (ϕ1), pour fournir un signal de situation électrique décalé (ϕ2).

9. Unité de commande (300, 500) selon la revendication 8, dans laquelle
- le module d'amortissement (350, 550) comprend une fonction trigonométrique (sin) qui émet un signal sensiblement sinusoïdal en fonction du signal de situation électrique, en particulier en fonction du signal de situation électrique décalé (ϕ₂) pour fournir un signal de situation électrique alternatif (ϕ₃).

10. Unité de commande (300, 500) selon l'une quelconque des revendications 8 - 9, dans laquelle
- le module d'amortissement (350, 550) présente une modification d'amplitude (356, 556) qui agit sur le signal de situation électrique (ϕₑₗₑk) en fonction d'une courbe caractéristique de travail (AP) de l'éolienne, en particulier sur le signal de situation électrique alternatif (ϕ3), pour fournir la composante alternative (q~, d~).

11. Unité de commande (300, 500) selon l'une quelconque des revendications 8 - 10, comprenant en outre :
- un déphaseur (370, 570) qui est configuré pour déphaser le signal de situation électrique (ϕₑₗₑk) d'une quantité prédéterminée, en particulier de 30°, et pour le fournir à l'unité de commande (320, 520).

12. Unité de commande (300, 500) selon l'une quelconque des revendications 8 - 11, comprenant en outre :
- un module de déphasage (560) qui est configuré pour multiplier la coordonnée d modifiée (d~) par une valeur prédéterminée, en particulier par -1, en particulier pour fournir une première coordonnée d modifiée (d1') pour un premier courant de stator triphasé d'un premier système d'enroulement triphasé (516) de l'éolienne et une seconde coordonnée d modifiée (d2') pour un second courant de stator triphasé d'un second système d'enroulement triphasé (518) de l'éolienne, dans laquelle le premier système d'enroulement triphasé (516) et le second système d'enroulement triphasé (518) sont de préférence déphasés de 30°.

13. Commande d'une éolienne, comprenant une unité de commande selon l'une quelconque des revendications 8 à 12.

14. Éolienne (100) comprenant une unité de commande qui est configurée pour mettre en œuvre un procédé selon l'une quelconque des revendications 1 à 7, ou une unité de commande (300, 500) selon l'une quelconque des revendications 8-12.

15. Éolienne selon la revendication 14, comprenant :
- un générateur (310, 510) qui présente un stator (312, 512) avec un axe de rotation et un rotor monté autour de l'axe de rotation, dans laquelle le stator est relié électriquement à un redresseur actif qui peut être commandé par une unité de commande, et
- une unité de commande (320, 520) pour le redresseur actif, dans laquelle
- le générateur présente deux stators (316, 318, 516, 518) déphasés de 30° qui sont reliés chacun à un module triphasé du redresseur actif, et
- l'unité de commande (520) est configurée pour
- mettre en œuvre une première transformée inverse (a1, b1, c1) d'une première coordonnée d modifiée (Id1') et d'une coordonnée q (lq-) et d'un premier signal de situation électrique (ϕelek1) pour le premier module triphasé du redresseur actif, et
- mettre en œuvre une seconde transformée inverse (a2, b2, c2) d'une seconde coordonnée d modifiée (Id2') et de la coordonnée d (Iq-) et d'un second signal de situation électrique (ϕelek2) pour le second module triphasé du redresseur actif, dans laquelle
- la seconde coordonnée d modifiée (Id2') est déphasée de 180° par rapport à la première coordonnée d modifiée (Id1'), et
- le second signal de situation électrique (ϕelek2) est déphasé de 30° par rapport au premier signal de situation électrique (ϕelek1).
